# EUROPEAN PATENT SPECIFICATION

(11) **EP 2 058 778 B1**
(45) Date of publication and mention of the grant of the patent: **17.02.2010**
(21) Application number: 07120411.9
(22) Date of filing: 09.11.2007
(51) Int. Cl.: G08G 1/0968, G01C 21/36, G08G 1/123

(54) **System and method for providing dynamic route information to users of wireless communications devices**
System und Verfahren zur Bereitstellung dynamischer Routeninformationen für Benutzer eines drahtlosen Kommunikationsgerätes
Système et procédé pour fournir des informations de route dynamique aux utilisateurs des dispositifs de communication sans fil

(43) Date of publication of application: 13.05.2009
(73) Proprietor: Research In Motion Limited, Waterloo, Ontario N2L 3W8 (CA)
(72) Inventor: Dicke, Ronald Anthony, Ottawa Ontario K1Y 0S4 (CA); Bowman, Gordon Gregory, Kemptville Ontario K0G 1J0 (CA)
(74) Representative: Patel, Binesh

(56) References cited:
- WO-A-02/29756
- GB-A- 2 379 270
- GB-A- 2 412 281
- US-A1- 2004 204 845
- US-A1- 2007 233 379
- US-A1- 2007 252 689

## Description

The present disclosure relates generally to wireless communications devices and, in particular, to techniques for providing route information to users of wireless communications devices.

Wireless communications devices such as the BlackBerry® by Research in Motion Limited provide a variety of useful functions, such as voice communication, e-mail and Web browsing. Increasingly, these wireless handheld devices are being equipped with GPS chipsets to provide navigation and other location-based services (LBS). For example, GPS-enabled wireless handheld devices can be used to map the current location of the device, to obtain route directions from the current location to a destination location, and to e-mail the mapped current location to another person. Similarly, GPS-enabled wireless handhelds can be used to send a map of an address location, meeting location or other point of interest. Although these map-sharing technologies are already very useful, further improvements remain highly desirable.

US2007/252689 discloses devices, systems and methods for remotely entering, storing and sharing location addresses for a positional information device, e.g., a global positioning system (GPS) device. The disclosed system allows a user to easily and safely enter an address into a GPS device by giving that address to a remote communications link and to have that link automatically program the user's GPS device for usage. A user can use stored addresses on multiple GPS devices without having to manually enter the addresses.

GB2412281 discloses an in-car navigation device which depicts dynamic travel information (congestions, weather, etc.) in the context of a schematic display of the actual roads that the information relates to. The schematic view can be a linear representation of the route and that schematic linear representation is displayed at the same time but separate from a map of a 2-D or 3-D representation of the actual road being travelled along and the current location of the device on that road. The device can send a request to a remote server over a wireless communications network for dynamic travel information relevant to a defined route and receive and display that information.

US2004/204845 discloses a display method and apparatus for a navigation system for receiving traffic information and displaying traffic incidents in a manner easily and quickly comprehensible by a user of the navigation system. The navigation system applies various criteria to the traffic incidents and the route to the destination and determines an order of displaying the traffic incidents in accordance with the degrees of severity to the driving to the intended or calculated route to the destination. In other aspect, instead of assigning the listing order, colors are assigned to the traffic incident icons based on the degrees of severity.

WO 02/29756 discloses a method for transmitting data to an electronic component of a motor vehicle. According to the method; data is generated in a computer system that is external to the motor vehicle and is subsequently transmitted by said computer system to a short message service centre, for example via the Internet. The data is then polled by the service centre in a time-delayed manner and is transmitted via a mobile radio connection as an individual short message in short message service format to the navigation system of the motor vehicle.

US2007/233379 discloses a method of displaying a map on a wireless communications device which includes obtaining map data for rendering the map to be displayed on the wireless communications device, the map data including label data for rendering labels on the map. The device generates a collision-avoidance array representative of the map to be rendered for testing potential label positions prior to actually rendering the labels on the map. The collision-avoidance array is populated by provisionally designating, for each successive label to be rendered, a label space in the collision-avoidance array that corresponds to a map space that is to be occupied by the label on the map. The device then determines whether each successive label to be rendered collides in the collision-avoidance array with any previously designated label spaces. If no collision exists for a given label, the label can be rendered on the map.

GB 2379270 discloses an on-board vehicle navigation system connected to a wireless message receiver, such as a cellular telephone. The system includes an application which checks each message received by the telephone. If the message is recognised as being intended for the navigation computer the application identifies the action which the message requires and an associated location in the message. The computer then performs the appropriate action, for example to plan a route passing through the location.

EP 1,282,054 discloses a method involving storing an invitation to a meeting transmitted by a terminal with location, time and user identification information, receiving information re the location of an invited user, determining a travel route to the meeting point and estimating the traveling time, determining a journey starting time and sending information to the invited users terminal with travel information and recommended starting time. Independent claims are also included for the following: a service computer for organization of meetings for user of communications network and a program module for an inventive service computer.

In accordance with one aspect of the present invention there is provided a method of providing route information for a plurality of wireless communications devices in accordance with claim 1.

In accordance with another aspect of the present invention there is provided a system for providing route information to a plurality of wireless communications devices in accordance with claim 4.

### BRIEF DESCRIPTION OF THE DRAWINGS

Further features and advantages of the present technology will become apparent from the following detailed description, taken in combination with the appended drawings, in which:

FIG. 1 is a block diagram schematically illustrating pertinent components of an exemplary wireless communications device and of an exemplary wireless communications network;

FIG. 2 is a more detailed block diagram of an exemplary wireless communications device;

FIG. 3A is a system diagram of network components which provide mapping functionality in the exemplary wireless communications devices of FIG. 1 and FIG. 2;

FIG. 3B illustrates an example of a message exchange between a wireless communications device and a map server for downloading map content to the wireless communications device based on the system of FIG. 3A;

FIG. 3C is a diagram showing a preferred Maplet data structure as an example of one data structure usable for mapping;

FIG. 4 is a schematic depiction of an example of a wireless network having an applications gateway for optimizing the downloading of map data from map servers to wireless communications devices;

FIG. 5 is a flowchart presenting steps of a method of dynamically generating and updating route information in accordance with implementations of the present technology;

FIG. 6 is an example scenario illustrating how the present technology can be used to dynamically update route information to a destination based;

FIG. 7 is an example scenario involving three mobile recipients who have received a common destination from a sender wherein each mobile device generates (and subsequently updates, as required) an individualized route to the common destination;

FIG. 8 is an illustration of an example of a wireless communications device having a drop-down menu for triggering the sending of route information to one or more recipients; and

FIG. 9 is a depiction of an example of a user interface on the sender's device for enabling the sender to specify the destination to be sent to the one or more recipients.

It will be noted that throughout the appended drawings, like features are identified by like reference numerals.

### GENERAL

The present technology takes account of a problem identified by the applicant pertaining to the distribution to one or more recipients of route information to a common destination. In particular, applicant has recognized that there has not been, to date, any efficient and convenient way of distributing route information (i.e. maps or route instructions depicting or describing a route to a common destination location) to a plurality of different recipients, and in particular to wireless handheld devices located in different locations. To do so conventionally requires that the sender have specific knowledge of the current location of each recipient (or to assume a default location for each recipient, e.g. their office or home address). More importantly though, this conventionally requires that the sender transmit a map (and/or route instructions) for each differently located recipient depicting or describing the particular route from the respective current location of each recipient to the common destination. A further problem (also recognized by the applicant) arises if any of the recipients of the route information have moved, in which case the received map (or route instructions) may no longer be relevant. A more generic problem is that, even when sending a route to a single recipient, if the recipient's present location is unknown, then a proper route cannot be specified.

The present technology takes account of the foregoing technical problems by providing a method, system, and wireless device that dynamically generate and update route information based on the current location of the recipient. The sender may specify a destination location and sends information describing this destination location to one or more recipients who then obtain (individually) their respective current locations using GPS chipsets or other positioning subsystems in or associated with, their respective devices. A specifically tailored map (and/or a specifically tailored set of route instructions) is then generated on each wireless handheld device to describe the route from that device's current location to the destination. A sender can thus distribute "customized" or "personalized" route information to a plurality of dispersed recipients using only a single message. In other words, on receipt of the common destination, the route information is dynamically generated by each recipient based on each recipient's current location as determined by each device's GPS receiver or other positioning subsystem. Where current location information is unavailable, a default starting location (specified either by the sender or by each recipient) can be used to determine the route to the destination.

Optionally, the device can then dynamically update the route information if the device moves by regenerating the map and/or route instructions from the newly updated current location to the destination.

### DESCRIPTION OF PREFERRED EMBODIMENTS

The details and particulars of these aspects of the technology will now be described below, by way of example, with reference to the attached drawings.

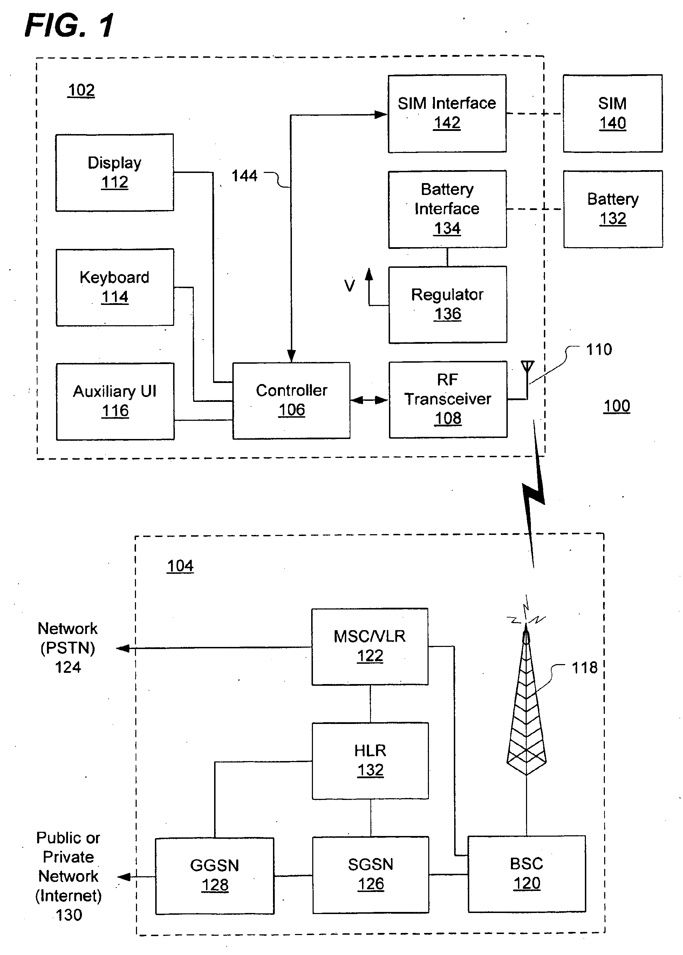

FIG. 1 is a block diagram of a communication system 100 which includes a wireless communications device 102 (also referred to as a mobile communications device) which communications through a wireless communication network 104. For the purposes of the present specification, the expression "wireless communications device" encompasses not only a wireless handheld, cell phone or wireless-enabled laptop but also any mobile communications device or portable communications device such as a satellite phone, wireless-enabled PDA or wireless-enabled MP3 player. In other words, for the purposes of this specification, "wireless" shall be understood as encompassing not only standard cellular or microwave RF technologies, but also any other communications technique that conveys data over the air using an electromagnetic signal.

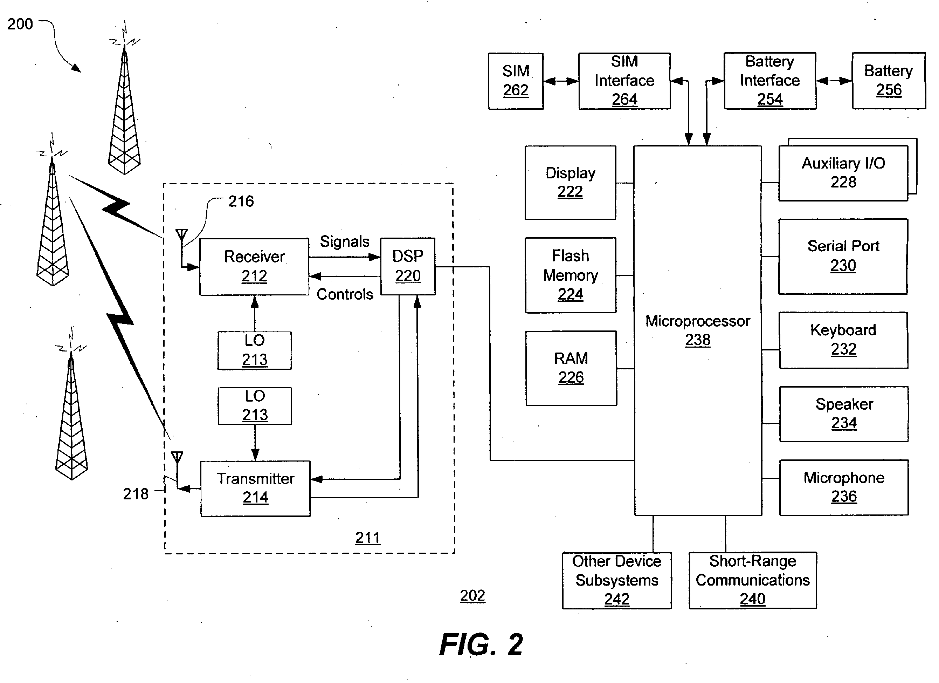

The wireless communications device 102 preferably includes a visual display 112, e.g. an LCD screen, a keyboard 114 (or keypad), and optionally one or more auxiliary user interfaces (UI) 116, each of which is coupled to a controller 106. The controller 106 is also coupled to radio frequency (RF) transceiver circuitry 108 and an antenna 110. Typically, controller 106 is embodied as a central processing unit (CPU) which runs operating system software in a memory device (described later with reference to FIG. 2). Controller 106 normally controls the overall operation of the wireless communications device 102, whereas signal processing operations associated with communications functions are typically performed in the RF transceiver circuitry 108. Controller 106 interfaces with the display screen 112 to display received information, stored information, user inputs, and the like. Keyboard/keypad 114, which may be a telephone-type keypad or a full QWERTY keyboard, is normally provided for entering commands and data.

The wireless communications device 102 sends communication signals to and receives communication signals from network 104 over a wireless link via antenna 110. RF transceiver circuitry 108 performs functions similar to those of station 118 and Base Station Controller (BSC) 120, including, for example, modulation and demodulation, encoding and decoding, and encryption and decryption. It will be apparent to those skilled in the art that the RF transceiver circuitry 108 will be adapted to the particular wireless network or networks in which the wireless communications device is intended to operate.

The wireless communications device 102 includes a battery interface 134 for receiving one or more rechargeable batteries 132. Battery 132 provides electrical power to electrical circuitry in the device 102, and battery interface 134 provides for a mechanical and electrical connection for battery 132. Battery interface 134 is couple to a regulator 136 which regulates power to the device. When the wireless device 102 is fully operationally, an RF transmitter of RF transceiver circuitry 108 is typically keyed or turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

Wireless communications device 102 may operate using a Subscriber Identity Module (SIM) 140, for example, which is connected to or inserted in the wireless communications device 102 at a SIM interface 142. SIM 140 is one type of a conventional "smart card" used to identify an end user (or subscriber) of wireless device 102 and to personalize the device, among other things. By inserting the SIM card 140 into the wireless communications device 102, an end user can have access to any and all of his subscribed services. SIM 140 generally includes a processor and memory for storing information. Since SIM 140 is coupled to SIM interface 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical wireless device. SIM 140 may store additional user information for the wireless device as well, including datebook (calendar) information and recent call information.

The wireless communications device 102 may consist of a single unit, such as a data communication device, a cellular telephone, a Global Positioning System (GPS) unit or other positioning subsystem, a multiple-function communication device with data and voice communication capabilities, a wireless-enabled personal digital assistant (PDA), or a wireless-enabled laptop computer. Alternatively, the wireless communications device 102 may be a multiple-module unit comprising a plurality of separate components, including but in no way limited to a computer or other device connected to a wireless modem. In particular, for example, in the block diagram of FIG. 1, RF circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU.

The wireless communications device 102 communicates in and through a wireless communication network 104. The wireless communication network may be a cellular telecommunications network. In the example presented in FIG. 1, wireless network 104 is configured in accordance with Global Systems for Mobile communications (GSM) and General Packet Radio Service (GPRS) technologies. Although wireless communication network 104 is described herein as a GSM/GPRS-type network, any suitable network technologies may be utilized such as Code Division Multiple Access (CDMA), Wideband CDMA (WCDMA), whether 2G, 3G, or Universal Mobile Telecommunication System (UMTS) based technologies. In this example, the GSM/GPRS wireless network 104 includes a base station controller (BSC) 120 with an associated tower station 118, a Mobile Switching Center (MSC) 122, a Home Location Register (HLR) 132, a Serving General Packet Radio Service (GPRS) Support Node (SGSN) 126, and a Gateway GPRS Support Node (GGSN) 128. MSC 122 is coupled to BSC 120 and to a landline network, such as a Public Switched Telephone Network (PSTN) 124. SGSN 126 is coupled to BSC 120 and to GGSN 128, which is, in turn, coupled to a public or private data network 130 (such as the Internet). HLR 132 is coupled to MSC 122, SGSN 126 and GGSN 128.

Tower station 118 is a fixed transceiver station. Tower station 118 and BSC 120 may be referred to as transceiver equipment. The transceiver equipment provides wireless network coverage for a particular coverage area commonly referred to as a "call". The transceiver equipment transmits communication signals to and receives communication signals from wireless communications devices 102 within its cell via station 118. The transceiver equipment normally performs such functions as modulation and possibly encoding and/or encryption of signals to be transmitted to the wireless communications device in accordance with particular, usually predetermined, communication protocols and parameters. The transceiver equipment similar demodulates and possibly decodes and decrypts, if necessary, any communication signals received from the wireless communications device 102 transmitting within its cell. Communication protocols and parameters may vary between different networks. For example, one network may employ a different modulation scheme and operate at different frequencies than other networks.

The wireless link shown in communication system 100 of FIG. 1 represents one or more different channels, typically different radio frequency (RF) channels, and associated protocols used between wireless network 104 and wireless communications device 102. An RF channel is a limited resource that must be conserved, typically due limits in overall bandwidth and a limited battery power of the wireless device 102. Those skilled in the art will appreciate that a wireless network in actual practice may include hundreds of cells, each served by a station 118, depending upon desired overall expanse of network coverage. All pertinent components may be connected by multiple switches and routers (not shown), controlled by multiple network controllers.

For all wireless communications devices 102 registered with a network operator, permanent data (such as the user profile associated with each device) as well as temporary data (such as the current location of the device) are stored in the HLR 132. In case of a voice call to the wireless device 102, the HLR 132 is queried to determine the current location of the device 102. A Visitor Location Register (VLR) of MSC 122 is responsible for a group of location areas and stores the data of those wireless devices that are currently in its area of responsibility. This includes parts of the permanent data that have been transmitted from HLR 132 to the VLR for faster access. However, the VLR of MSC 122 may also assign and store local data, such as temporary identifications. Optionally, the VLR of MSC 122 can be enhanced for more efficient co-ordination of GPRS and non-GPRS services and functionality (e.g. paging for circuit-switched calls which can be performed more efficiently via SGSN 126, and combined GPRS and non-GPRS location updates).

Serving GPRS Support Node (SGSN) 126 is at the same hierarchical level as MSC 122 and keeps track of the individual locations of wireless devices 102. SGSN 126 also performs security functions and access control. Gateway GPRS Support Node (GGSN) 128 provides internetworking with external packet-switched networks and is connected with SGSNs (such as SGSN 126) via an IP-based GPRS backbone network. SGSN 126 performs authentication and cipher setting procedures based on the same algorithms, keys, and criteria as in existing GSM. In conventional operation, cell selection may be performed autonomously by wireless device 102 or by the transceiver equipment instructing the wireless device to select a particular cell. The wireless device 102 informs wireless network 104 when it reselects another cell or group of cells, known as a routing area.

In order to access GPRS services, the wireless device 102 first makes its presence known to wireless network 104 by performing what is known as a GPRS "attach". This operation establishes a logical link between the wireless device 102 and SGSN 126 and makes the wireless device 102 available to receive, for example, pages via SGSN, notifications of incoming GPRS data, or SMS messages over GPRS. In order to send and receive GPRS data, the wireless device 102 assists in activating the packet data address that it wants to use. This operation makes the wireless device 102 known to GGSN 128; internetworking with external data networks can thereafter commence. User data may be transferred transparently between the wireless device 102 and the external data networks using, for example, encapsulation and tunnelling. Data packets are equipped with GPRS-specific protocol information and transferred between wireless device 102 and GGSN 128.

Those skilled in the art will appreciate that a wireless network may be connected to other systems, possibly including other networks, not explicitly shown in FIG. 1. A network will normally be transmitting at very least some sort of paging and system information on an ongoing basis, even if there is no actual packet data exchanged. Although the network consists of many parts, these parts all work together to result in certain behaviours at the wireless link.

FIG. 2 is a detailed block diagram of a preferred wireless communications device 202. The wireless device 202 is preferably a two-way communication device having at least voice and advanced data communication capabilities, including the capability to communicate with other computer systems. Depending on the functionality provided by the wireless device 202, it may be referred to as a data messaging device, a two-way pager, a cellular telephone with data message capabilities, a wireless Internet appliance, or a data communications device (with or without telephony capabilities). The wireless device 202 may communicate with any one of a plurality of fixed transceiver stations 200 within its geographic coverage area.

The wireless communications device 202 will normally incorporate a communication subsystem 211, which includes a receiver 212, a transmitter 214, and associated components, such as one or more (preferably embedded or internal) antenna elements 216 and 218, local oscillators (LO's) 213, and a processing module such as a digital signal processor (DSP) 220. Communication subsystem 211 is analogous to RF transceiver circuitry 108 and antenna 110 shown in FIG. 1. As will be apparent to those skilled in the field of communications, the particular design of communication subsystem 211 depends on the communication network in which the wireless device 202 is intended to operate.

The wireless device 202 may send and receive communication signals over the network after required network registration or activation procedures have been completed. Signals received by antenna 216 through the network are input to receiver 212, which may perform common receiver functions as signal amplification, frequency down conversion, filtering, channel selection, and the like, and, as shown in the example of FIG. 2, analog-to-digital (A/D) conversion. A/D conversion of a received signal allows more complex communication functions such as demodulation and decoding to performed in the DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in the DSP 220.

Network access is associated with a subscriber or user of the wireless device 202, and therefore the wireless device requires a Subscriber Identity Module or SIM card 262 to be inserted in a SIM interface 264 in order to operate in the network. SIM 262 includes those features described in relation to FIG. 1. Wireless device 202 is a battery-powered device so it also includes a battery interface 254 for receiving one or more rechargeable batteries 256. Such a battery 256 provides electrical power to most if not all electrical circuitry in the device 102, and battery interface provides for a mechanical and electrical connection for it. The battery interface 254 is coupled to a regulator (not shown) which provides a regulated voltage V to all of the circuitry.

Wireless communications device 202 includes a microprocessor 238 (which is one implementation of controller 106 of FIG. 1) which controls overall operation of wireless device 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-board functions. Notably, some subsystems, such as keyboard 232 and display 222, for example, may be used for both communication-related functions, such as entering a text message for transmission over a communication network, and device-resident functions such as a calculator or task list. Operating system software used by the microprocessor 238 is preferably stored in a persistent (non-volatile) store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, enables execution of software applications on the wireless device 202. A predetermined set of applications which control basic device operations, including at least data and voice communication applications, will normally be installed on the device 202 during its manufacture. For example, the device may be preloaded with a personal information manager (PIM) having the ability to organize and manage data items relating to the user's profile, such as e-mail, calendar events, voice mails, appointments, and task items. Naturally, one or more memory stores are available on the device 202 and SIM 256 to facilitate storage of PIM data items and other information.

The PIM application preferably has the ability to send and receive data items via the wireless network. PIM data items may be seamlessly integrated, synchronized, and updated via the wireless network, with the wireless device user's corresponding data items stored and/or associated with a host computer system thereby creating a mirrored host computer on the wireless device 202 with respect to such items. This is especially advantageous where the host computer system is the wireless device user's office computer system. Additional applications may also be loaded into the memory store(s) of the wireless communications device 202 through the wireless network, the auxiliary I/O subsystem 228, the serial port 230, short-range communications subsystem 240, or any other suitable subsystem 242, and installed by a user in RAM 226 or preferably a non-volatile store (not shown) for execution by the microprocessor 238. Such flexibility in application installation increases the functionality of the wireless device 202 and may provide enhanced onboard functions, communication-related functions or both. For example, secure communication applications may enable electronic commerce functions and other such financial transactions to be performed using the wireless device 202.

In a data communication mode, a received signal such as a text message, an e-mail message, or a web page download will be processed by communication subsystem 211 and input to microprocessor 238. Microprocessor 238 will preferably further process the signal for output to display 222 or alternatively to auxiliary I/O device 228. A user of the wireless device 202 may also compose data items, such as email messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of the wireless communications device 202 is substantially similar, except that the received signals would be output to speaker 234 and signals for transmission would be generated by microphone 236. Alternative voice or audio I/O subsystems, such as a voice message recording subsystem, may also be implemented on the wireless device 202. Although voice or audio signal output is preferably accomplished primarily through speaker 234, display 222 may also be used to provide an indication of the identity of the calling party, duration on a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of wireless device 202 by providing for information or software downloads to the wireless device 202 other than through the wireless network. The alternate download path may, for example, be used to load an encryption key onto the wireless device 202 through a direct and thus reliable and trusted connection to thereby provide secure device communications.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a trademark of Bluetooth SIG, Inc.

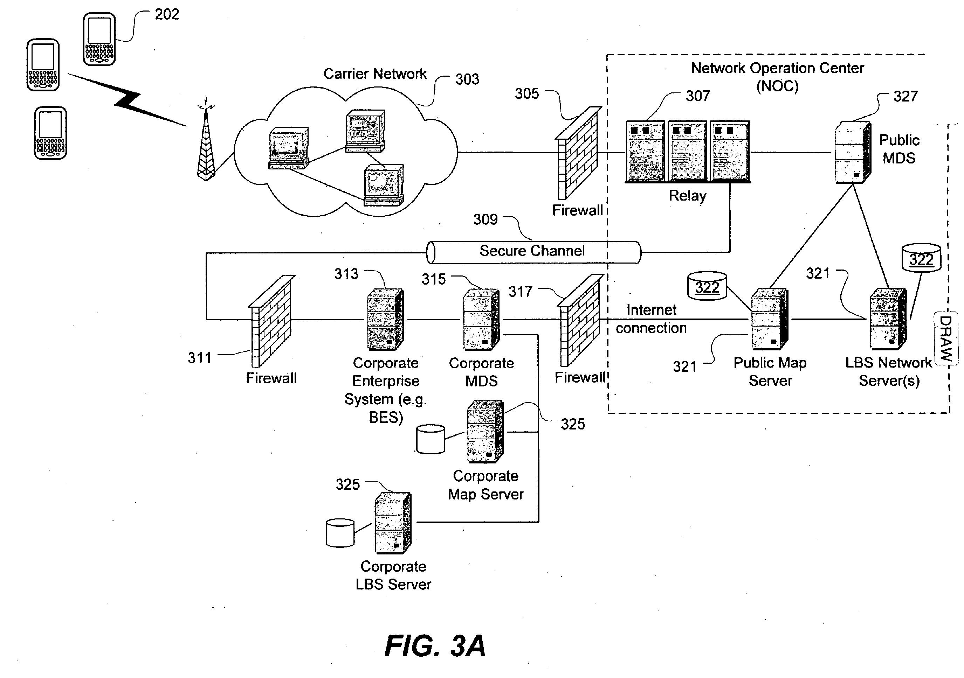

FIG. 3A is a system diagram of network components which provide mapping functionality in the exemplary wireless communication devices of FIGS. 1 and 2. It should be understood that the networks shown in FIGS. 1-3A are merely examples of certain network implementations. In other words, the present technology can be implemented on other types of networks or on networks having different architectures. To achieve this mapping functionality, a mapping application is also provided in memory of the wireless communications device for rendering visual maps in its display. Wireless communications devices 202 are connected over a mobile carrier network 303 for communication through a firewall 305 to a relay 307. A request for map data from any one of the wireless communications devices 202 is received at relay 307 and passed via a secure channel 309 through firewall 311 to a corporate enterprise server 313 and corporate mobile data system (MDS) server 315. The request is then passed via firewall 317 to a public map server and/or to a public location-based service (LBS) server 321 which provides location-based services (LBS) to handle the request. The network may include a plurality of such map servers and/or LBS servers where requests are distributed and processed through a load distributing server. The map/LBS data may be stored on this network server 321 in a network database 322, or may be stored on a separate map server and/or LBS server (not shown). Private corporate data stored on corporate map/LBS server 325 may be added to the public data via corporate MDS server 315 on the secure return path to the wireless device 202. Alternatively, where no corporate servers are provided, the request from the wireless device 202 may be passed via relay,307 to a public MDS server 327, which sends the request to the public map/LBS server 321 providing map data or other local-based service in response to the request. For greater clarity, it should be understood that the wireless devices can obtain map data from a "pure" map server offering no location-based services, from an LBS server offering location-based services in addition to map content, or from a combination of servers offering map content and LBS.

A Maplet data structure is provided, by way of example, that contains all of the graphic and labelled content associated with a geographic area (e.g. map features such as restaurants (point features), streets (line features) or lakes (polygon features)). However, it should be appreciated that the map data can have a different structure than the Maplets described herein. Maplets are structured in Layers of Data Entries ("DEntries") identified by a "Layer ID" to enable data from different sources to be deployed to the device and meshed for proper rendering. Each DEntry is representative of one or more artefact or label (or a combination of both) and includes coordinate information (also referred to as a "bounding box" or "bounding area") to identify the area covered by the DEntry and a plurality of data points that together represent the artefact, feature or label. For example, a DEntry may be used to represent a street on a city map (or a plurality of streets), wherein the carious points within the DEntry are separated into different parts representing various portions of the artefact or map feature (e.g. portions of the street). A wireless device may issue a request for the map server to download only those DEntries that are included within a specified area or bounding box representing an area of interest that can be represented by, for example, a pair of bottom left, top right coordinates.

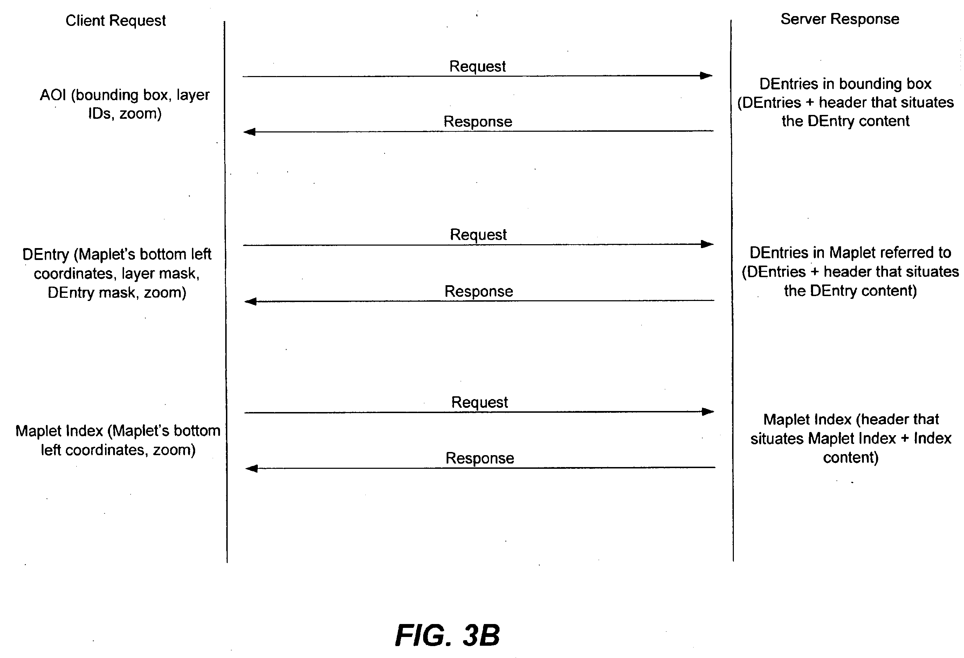

As depicted in FIG. 3B, the wireless communications device issues one or more AOI (Area of Interest) requests, DEntry or data requests and Maplet Index requests to the map server for selective downloading of map data based on user context. Thus, rather than transmitting the entire map data for an area in reply to each request from the device (which burdens the wireless link), local caching may be used in conjunction with context filtering of map data on the server. For example, if a user's wireless device is GPS-enabled and the user is traveling in an automobile at 120 km/h along a freeway then context filtering can by employed to prevent downloading of map data relating to passing side streets. Or, if the user is traveling in an airplane at 30,000 feet, then context filtering can be employed to prevent downloading of map data for any streets whatsoever. Also, a user's context can be defined, for example, in terms of occupation, e.g. a user whose occupation is a transport truck driver can employ context filtering to prevent downloading of map data for side streets on which the user's truck is incapable of traveling, or a user whose occupation is to replenish supplied of soft drink dispensing machines can employ context filtering to download public map data showing the user's geographical area of responsibility with irrelevant features such as lakes and parks filtered out and private map data containing the location of soft drink dispensing machines superimposed on the public map data.

The Maplet Index request results in a Maplet Index (i.e. only a portion of the Maplet that provides a table of contents of the map data available within the Maplet rather than the entire Maplet) being downloaded from the map server to the device, thereby conserving OTA(Over-the-Air) bandwidth and device memory caching requirements. The Maplet Index conforms to the same data structure as a Maplet, but omits the data points. Consequently, the Maplet Index is small (e.g. 300-400 bytes) relative to the size of a fully populated Maplet or a conventional bit map, and inclues DEntry bounding boxes and attributes (size, complexity, etc.) for all artefacts within the Maplet. As the field of view changes (e.g. for a location-aware device that displays a map while moving), the device (client) software assesses whether or not it needs to download additional data from the server. Thus, if the size attribute or complexity attribute of an artefact that has started to move into the field of view of the device (but is not yet being displayed) is not relevant to the viewer's current context, then the device can choose not to display that portion of the artifact. On the other hand, if the portion of the artefact is appropriate for display, then the device accesses its cache to determine whether the DEntries associated with that portion of the artefact have already been downloaded, in which case the cached content is displayed. Otherwise, the device issues a request for the map server to download all the of the DEntries associated with the artifact portion.

By organizing the Maplet data structure in Layers, it is possible to seamlessly combine and display information obtained from public and private databases. For example, it is possible for the device to display an office building at a certain address on a street (e.g. a 1^{st} z-order attribute from public database), adjacent a river (e.g. a 2^{nd} z-order attribute from public database), with a superimposed floor plane of the building to show individual offices (e.g. 11^{th} z-order attribute from a private database, accessible through a firewall).

Referring back to FIG. 3A, within the network having map server(s) and/or LBS server(s) 321 and database(s) 322 accessible to it, all of the map data for the entire world is divided and stored as a grid according to various levels of resolution (zoom), as set forth below in Table A. Thus, a single A-level Maplet represents a 0.05 x 0.05 degree grid area; a single B-level Maplet represents a 0.5 x 0.5 degree grid area; a single C-level Maplet represents a 5 x 5 degree grid area; a single D-level Maplet represents a 50 x 50 degree grid area; and a single E level Maplet represents the entire world in a single Maplet. It is understood that Table A is only an example of a particular Maplet grid division; different grid divisions having finer or coarser granularity may, of courser, be substituted. A Maplet includes a set of layers, with each layer containing a set of DEntries, and each DEntry containing a set of data points.

**Table A:**

| **Level** | **Grid (degrees)** | **# of Maplets to cover the World** | **# of Maplets to cover North America** | **# of Maplets to cover Europe** |
|---|---|---|---|---|
| A | 0.05 x 0.05 | 25,920,000 | 356,000 | 100,000 |
| B | 0.5 x 0.5 | 259,200 | 6,500 | 1000 |
| C | 5 x 5 | 2,592 | 96 | 10 |
| D | 50 x 50 | 32 | 5 | 5 |
| E | World | 1 | 1 | 1 |

As mentioned above, three specific types of requests may be generated by a wireless communications device (i.e. the client) - AOI requests, DEntry requests and Maplet Index requests. The requests may be generated separately or in various combinations, as discussed in greater detail below. An AOI (area of interest) request calls for all DEntries in a given area (bounding box) for a predetermined or selected set of z-order Layers. The AOI request is usually generated when the device moves to a new area so as to fetch DEntries for display before the device client knows what is available in the Maplet. The Maplet Index has the exact same structure as a Maplet but does not contain complete DEntries (i.e. the data Points actually representing artifacts and labels are omitted). Thus, a Maplet Index defines what Layers and DEntries are available for a given Maplet. A data or DEntry request is a mechanism to bundle together all of the required Dentries for a given Maplet.

Typically, AOI and Maplet Index requests are paired together in the same message, although they need not be, while DEntry requests are generated most often. For example, when a wireless device moves into an area for which no information has been stored on the device client, the Maplet Index request returns a Maplet Index that indicates what data the client can specifically request from the server 321, while the AOI request returns any DEntries within the area of interest for the specified Layers (if they exist). In the example requests shown on Figure 3B, the desired Maplet is identified within a DEntry request by specifying the bottom-left Maplet coordinate. In addition, the DEntry request may include a layer mask so that unwanted Layers are not downloaded, a DEntry mask so that unwanted data Points are not downloaded, and zoom values to specify a zoom level for the requested DEntry. Once the device client has received the requested Maplet Index, the client typically then issues multiple DEntry requests to ask for specific DEntries (since the client knows all of the specific DEntries that are available based on the Maplet Index).

In this particular implementation, a collection of 20 x 20 A-level Maplets (representing a 1 x 1 degree square) is compiled into a Maplet Block File (.mbl). An .mbl file contains a header which specifies the offset and length of each Maplet in the .mbl file. The same 20 x 20 collection of Maplet index data is compiled into a Maplet Index file (.mbx). The .mbl and .mbx file structures are set forth in Tables B and C, respectively.

**Table B :**

| **Address Offset** | **Offset** | **Length** |
|---|---|---|
| 0x000 | Maplet #0 Offset (4 bytes) | Maplet #0 Length (4 bytes) |
| 0x008 | Maplet #1 Offset | Maplet #1 Length |
| 0x010 | Maplet #2 Offset | Maplet #2 Length |
| ... | ... | ... |
| 0xC78 | Maplet #399 Offset | Maplet #399 Length |
| 0xC80 | Beginning of Maplet #0 | |
| 0xC80 + Size of Maplet #0 | Beginning of Maplet #1 | |
| 0xC80 + Size of Maplet #0 + #1 | Beginning of Maplet #2 | |
| ... | ... | |
| 0xC80 + Σ of Size of Maplets (#0 : #398) | Beginning of Maplet #399 | |

In Table B, the offset of Maplet #0 is 0x0000_0000 since, in this particular example, the data structure is based on the assumption that the base address for the actual Maplet data is 0x0000_0C80. Therefore the absolute address for Maplet #0 data is: Maplet #0 Address = Base Address (0x0000_0C80) + Maplet #0 Offset (0x0000_0000), and additional Maplet addresses are calculated as: Maplet #(n + 1) Offset = Maplet #(n) Offset + Maplet #(n) Length. If a Maplet has no data or does not exist, the length parameter is set to zero (0x0000_0000).

**Table C:**

| **Address Offset** | **Offset (4 bytes)** | **Length (4 bytes)** |
|---|---|---|
| 0x000 | Maplet Index #0 Offset | Maplet Index #0 Length |
| 0x008 | Maplet Index #1 Offset | Maplet Index #1 Length |
| 0x010 | Maplet Index #2 Offset | Maplet Index #2 Length |
| ... | ... | ... |
| 0xC78 | Maplet Index #399 Offset | Maplet Index #399 Length |
| 0xC80 | Beginning of Maplet Index #0 | |
| 0xC80 + Size of Maplet Index #0 | Beginning of Maplet Index #1 | |
| 0xC80 + Size of Maplet Index #0 + #1 | Beginning of Maplet Index #2 | |
| ... | ... | |
| 0xC80 + Σ of Size of Maplet Indices (#0 : #399) | Beginning of Maplet Index #399 | |

In Table C, the offset of Maplet Index #0 is 0x0000_0000 since, according to an exemplary embodiment the data structure is based on the assumption that the base address for the actual Maplet index data is 0x0000_0C80. Therefore, the absolute address for Maplet Index #0 data is: Maplet Index #0 Address = Base Address (0x0000_0C80) + Maplet Index #0 Offset (0x0000_0000), and additional Maplet index addresses are calculated as: Maplet Index #(n + 1) Offset = Maplet Index #(n) Offset + Maplet Index #(n) Length. If a Maplet Index has no data or does not exist, the length parameter is set to zero (0x0000_0000).

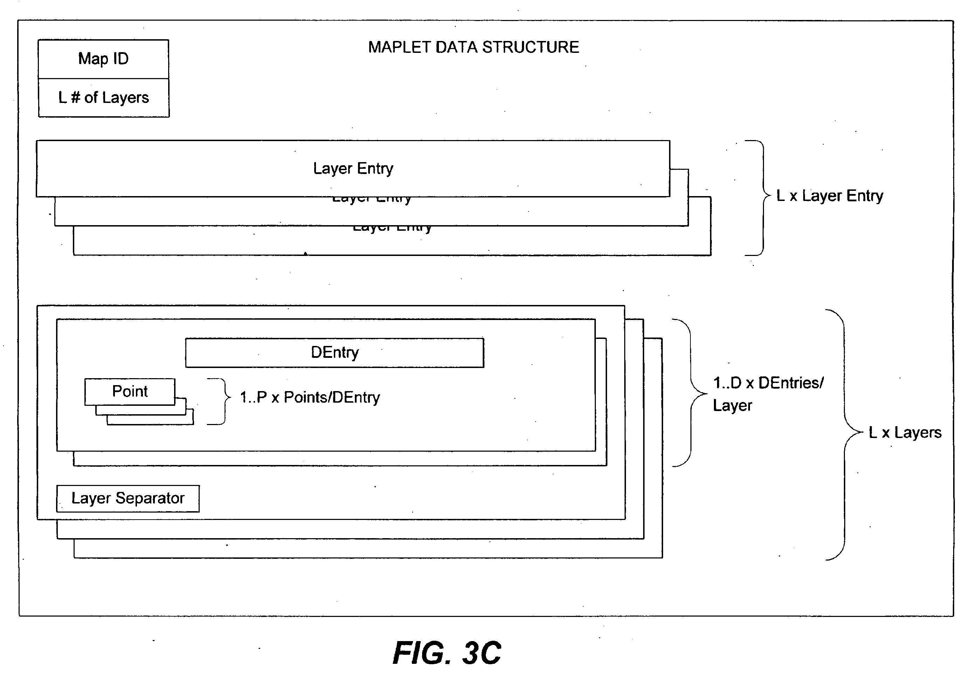

FIG. 3C and Table D (below), in combination, illustrate, by way of example only, a basic Maplet data structure. Generally, as noted above, the Maplet data structure can be said to include a Maplet Index (i.e. an index of the DEntries, each of which is representative of either an artifact or a label or both) together with data Points for each DEntry that actually form such artifacts and labels. In this example, each Maplet includes a Map ID (e.g. 0xA1B1C1D1), the # of Layers in the Maplet, and a Layer Entry for each Layer. The Map ID identifies the data as a valid Maplet, and according to one alternative, may also be used to identify a version number for the data. The # of Layers is an integer which indicates the number of Layers (and therefore Layer Entries) in the Maplet. Each Layer Entry defines rendering attributes and is followed by a list of DEntries for each Layer. The above forms a Maplet Index. For a complete Maplet, each DEntry contains a set of data Points (referred to herein as oPoints) or Labels). It will be noted that Layers can have multiple DEntries and the complete list of DEntries and Points are grouped by Layer and separated by a Layer Separator (e.g. hex value 0xEEEEEEEE). In this example, each Layer Entry is 20 bytes long, and a DEntry is 12 bytes long. However, the number of Layers, number of DEntries per Layer and the number of Points per DEntry depends on the map data and is generally variable.

Table D provides a high "byte-level" description of a Maplet for this example.

**Table D :**

| Data | | Quantity | Total # of Bytes |
|---|---|---|---|
| Map ID | | 1 | 4 bytes |
| # of Layers | | 1 | 4 bytes |
| Layer Entries | | # of Layers | 20 bytes x (# of Layers) |
| DEntry of a Layer | x (# of DEntries in a Layer) | # of Layers | 12 bytes x (Σ of the # of DEntries in each Layer) + |
| Points for DEntry of a Layer | | | 4 bytes x (Σ of the # of Points in each DEntry in each Layer) + |
| Layer Separator | | | 4 bytes x (# of Layers) |

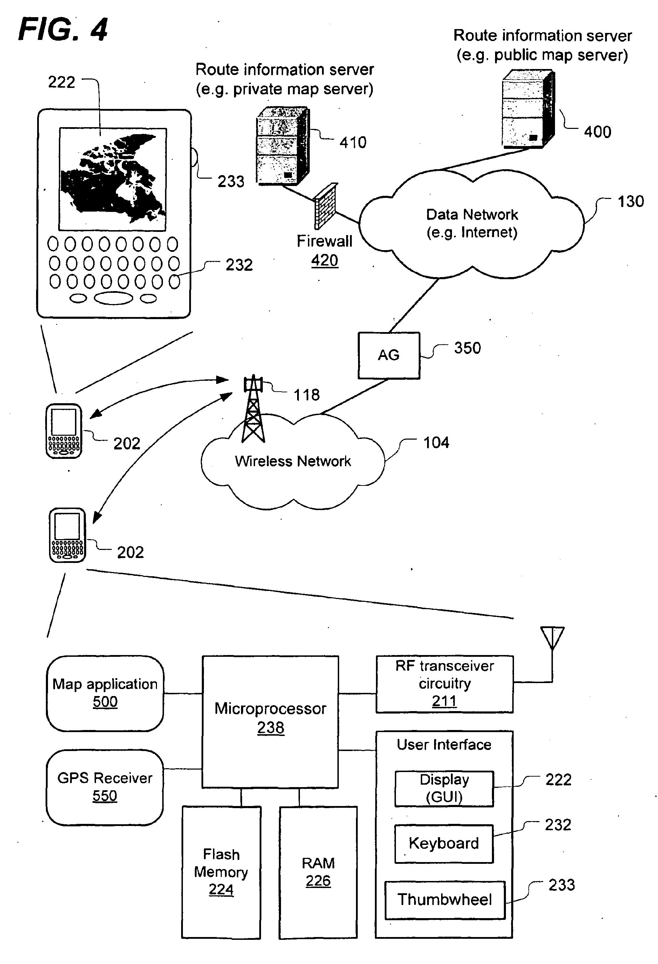

By way of a further example, the wireless network 200 depicted in FIG. 4 can include an applications gateway (AG) 350 for optimizing data flow for onboard applications such as a mapping application 500 stored in memory (*e.g*. stored in a flash memory 224) and executable by the microprocessor 238 of the wireless device 202.

As shown in FIG. 4, the wireless network 200 hosts a plurality of handheld wireless communications devices 202 (such as the BlackBerry® by Research in Motion Limited) having voice and data capabilities (for both e-mail and Web browsing) as well as a full QWERTY keyboard. These wireless communications devices 202 can access Web-based map data on public map servers 400 hosted on the Internet or other data network 130 via the applications gateway (AG) 350 which mediates and optimizes data flow between the wireless network 200 and the data network by performing various mappings, compressions and optimizations on the data. The wireless communications device 202 can thus provide route information to a user of the device. In accordance with implementations of the presently disclosed technology, the wireless communications device 202 includes a radiofrequency transceiver (e.g. the RF transceiver circuitry 211 shown in FIG. 2) for receiving a destination location, a GPS chipset (e.g. GPS receiver 550 shown in FIG. 4) for determining a current location of the device 202 (or other positioning subsystem), a processor (e.g. microprocessor 238 shown in FIG. 2) operatively coupled to memory (e.g. Flash Memory 224 and RAM 226 shown in FIG. 2) for instructing the transceiver to communicate location data for the current location and the destination location to a route information server (e.g. Map servers 321, 325 shown in FIG. 3A or route information servers 400, 410 shown in FIG. 4) for downloading route information for a route from the current location of the device to the destination location, and a user interface (e.g. display (GUI) 222) for providing the route information to the user.

The map server extracts generic map content from a Geographical Information Systems (GIS) map database (e.g. Navtech®, TelAtlas®, etc.) at a specified level of resolution (zoom level). Custom graphics associated with the query, such as highlighted route, pushpin for current position or street address, etc. are post-processed and merged by the server with the generic map content. Relevant screen graphics are then labelled, and the merged map graphic is compressed and delivered to the device for display.

In operation, a user of the wireless communications device 202 uses an input device such as keyboard 232 and/or thumbwheel/trackball 233 to cause the microprocessor 238 to open the map application 500 stored in the memory 224. Using the keyboard 232 and thumbwheel/trackball 233, the user can specify a map location on the map application 500. In response to this request/command, the microprocessor 238 instructs the RF transceiver circuitry 211 to transmit the request over the air through the wireless network 104. The request is processed by the AG 350 and forwarded into the data network (Internet) using standard packet-forwarding protocols to one or more of the public and/or private map servers 400, 410. Accessing a private map server 410 behind a corporate firewall 420 was described above with reference to FIG. 3A. Map data downloaded from these one or more map servers 400, 410 is then forwarded in data packets through the data network and mapped/optimized by the AG 350 for wireless transmission through the wireless network 104 to the wireless communications device 202 that originally sent the request.

The downloaded map data (including any available label data) can be cached locally in RAM 226, and displayed on the display 222 or graphical user interface (GUI) of the device. If a further request is made by the user (or if the user wants a change in the field of view by zooming or panning), the device will check whether the data required can be obtained from the local cache (RAM 226). If not, the device issues a new request to the one or more map servers 400, 410 in the same manner as described above.

As described earlier, map data can optionally be downloaded first as a Maplet Index enabling the user to then choose which DEntries listed in the Index to download in full. Furthermore, as described earlier, the map application can include user-configurable context filtering that enables the user to filter out unwanted map features or artifacts by not downloading specific DEntries corresponding to those unwanted map features or artifacts.

In order to dynamically provide route information in accordance with implementations of the presently disclosed technology, the wireless communications device preferably includes a Global Positioning System (GPS) receiver ("GPS chip") 550 for determining the current location or current global position of the device. Alternatively, a different type of positioning subsystem can be used, e.g. a radiolocation subsystem that determines its current location using radiolocation techniques, as will be elaborated below. In the main implementation, though, the GPS chipset 550 receives and processes signals from GPS satellites to generate latitude and longitude coordinates, thus making the device "location aware". In lieu of, or in addition to, GPS coordinates, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell.

The present technology can also be implemented in a system, such as the one shown in FIG. 4, that is configured to provide route information to one or more GPS-enabled wireless communications devices communicatively connected to a communications network at different locations in the network. This system enables a sender to distribute "customized" or "personalized" route information regarding a common destination to a plurality of different mobile users who are located in different locations by relying on each recipient's GPS capability to determine its current position in real-time. Conventionally, the sender would have to send a specific message to each recipient with personally tailored route information (based on a presumed individual current location for each recipient). The present technology enables the sender to send a single communication to all the mobile recipients, stipulating a common destination, and enabling each recipient to use his or her respective current location as the starting location in generating a route to the common destination location. Where the current location is unavailable, the route to the destination is generated using a default starting location that can be specified either by the sender or by each recipient.

Referring to FIG. 4, this system includes a computing device, e.g. another wireless device 202, networked desktop computer (not shown), wireless-enabled laptop (not shown), etc. that is communicatively connected to the communications network (in this case the wireless network 104 which in turn is connected to the Internet or other data network 130) for enabling a sender (who, for example, could be operating one of the wireless devices 202) to send a common destination location to the plurality of wireless communications devices 202, each of the devices 202 comprising a GPS receiver 550 for determining a respective current location.

As depicted in FIG. 4, the system also includes a public route information server 400 and/or a private route information server 410 (which is shown in this figure as being securely disposed behind firewall 420). The route information servers are typically map servers that provide map data to networked computing devices or wireless devices upon request, for example, in vector format or alternatively as bitmaps. In addition to providing the map data, the route information servers (e.g. the map servers) can also provide route instructions or route directions which are turn-by-turn instructions for each decision point along the route. These route information servers are communicatively connected to the network (which, for example, includes both the wireless network 104 and the data network 130) for transmitting route information to each wireless communications device 202 in response to location data received from each wireless communications device. The "location data" comprises (1) the current location of the respective wireless communications device, e.g. its GPS position fix, which is used to represent the starting location, and (2) the destination location, which has been received wirelessly from the sender. The location data may also include a default location that has been specified, set or preconfigured by the sender or by the recipient for use in generating the route information in the event that the current location cannot be determined..

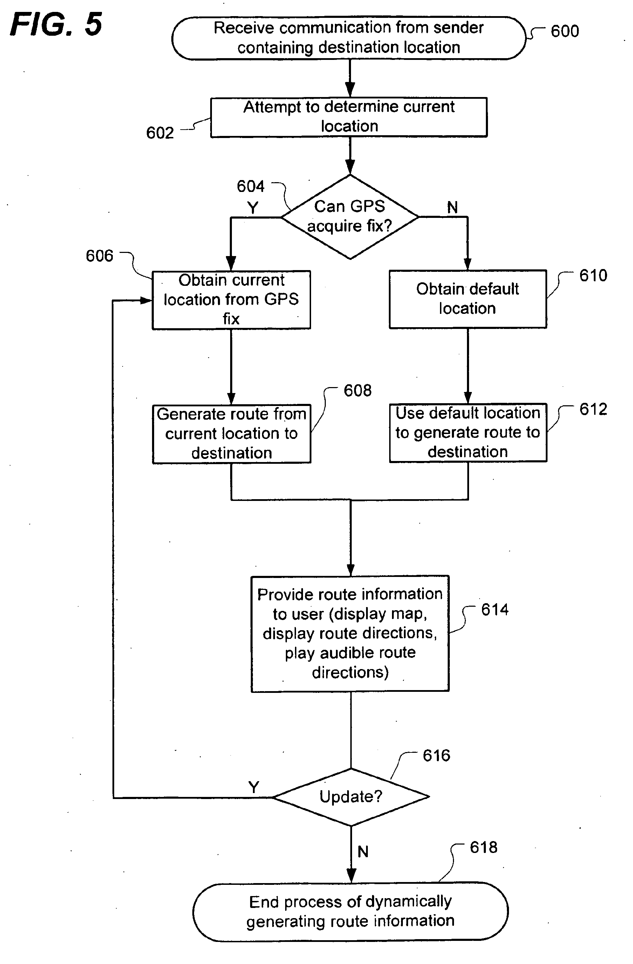

Operation of the systems described above will now be described with reference to the method steps depicted in the flowchart of FIG. 5. As depicted in FIG. 5, this novel method of providing route information to a user of a wireless communications device includes an initial step 600 wirelessly receiving a communication containing a destination location specified by the sender. On receipt of the destination location, the user's (i.e. recipient's) device attempts (at step 602) to determine a current location of the device, for example, by attempting to acquire a GPS position fix using the GPS chipset 550 on the device. At step 604, the device determines whether a GPS fix is possible. If yes, then the device proceeds to determine its current location at step 606. At step 608, the device then generates a route from the current location of the device to the destination location. On the other hand, if the device could not acquire a GPS position fix (referring back to step 604), then the device obtains the default location (step 610) and the uses the default location to generate the route to the destination (step 612). In other words, the default starting location can be used for generating the route in the event that the device is unable to determine its current location. The default location can be specified by the sender (e.g. received as part of the same communication that contained the destination location) or it can be specified, set or preconfigured by the device user (recipient).

Once the route has been generated (either using the current location or the default location), then device then provides the route information to the user at step 614. As will be elaborated below, "*route information*" could be graphical (e.g. a map in bitmap or JPEG format or a hyperlinked URL to a map that can be downloaded), textual (e.g. a set of turn-by-turn route direction or driving instructions), or audible (e.g. a text-to-voice audible report of how to reach the destination or a set of spoken turn-by-turn instructions to guide the user to the destination), or any combination thereof. Accordingly, "*providing*" route information could involve not only *displaying* the map, hyperlinked URL, and/or textual turn-by-turn instructions on the graphical user interface (GUI) or LCD display screen of the device but could also involve *audibly* playing text-to-voice turn-by-turn instructions or a concise audible report of how to reach the destination. The foregoing steps thus constitute a method of "dynamically" generating route information because the route information is generated (provided a GPS fix can be acquired) based on the current location as determined in real-time by the recipient device, irrespective of where that recipient device might be (provided, of course, it has a position fix), as opposed to receiving "static" route information where the starting location and destination location are prescribed by the sender, and the route information may then be inaccurate or irrelevant because the mobile user is not where the sender thinks he is, or because he has moved in the time since the sender prescribed the starting location. The dynamic generating of route information provides accurate and relevant route information by computing or generating the route based on the "actual" current location of the recipient's device, not the presumed or advertised location of the device.

As further depicted in FIG. 5, the method optionally includes additional steps of updating the current location of the device in order to dynamically update the route information based on an updated current location of the device. This provides "dynamic" route information to the user because the route information, be it a map or route directions, is updated dynamically as the device moves. In other words, the route information is updated in real-time based on the movements of the user. Dynamic updating includes, as shown in FIG. 5, a step 616 of querying whether an update is required or warranted. For example, the dynamic updating function could be disabled by the user, or it might be impossible to get a further GPS fix for whatever reason. Alternatively, dynamic updating may cease because the user has reached the destination or because the device has not moved. In any event, if a decision at step 616 is made that no further dynamic updating of the route information is warranted, then the method (or process) of dynamically generating (and updating) route information is terminated at step 618. On the other hand, if at step 616, a decision is made to dynamically update the route information, then the device obtains its new (updated) current location at step 606 and re-generates the route (step 608) from the newly updated current location to the destination. The dynamically updated route information is then provided in the manner previously described at step 614.

The foregoing method steps can be implemented as coded instructions in a computer program product. In other words, the computer program product is a computer-readable medium upon which software code is recorded to perform the foregoing steps when the computer program product is loaded into memory and executed on the microprocessor of the wireless communications device.

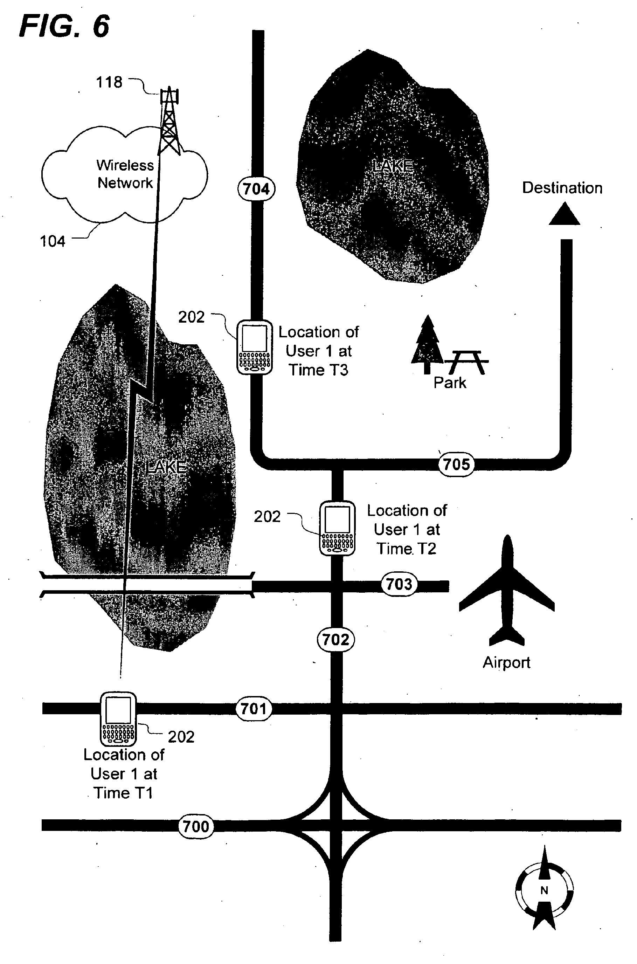

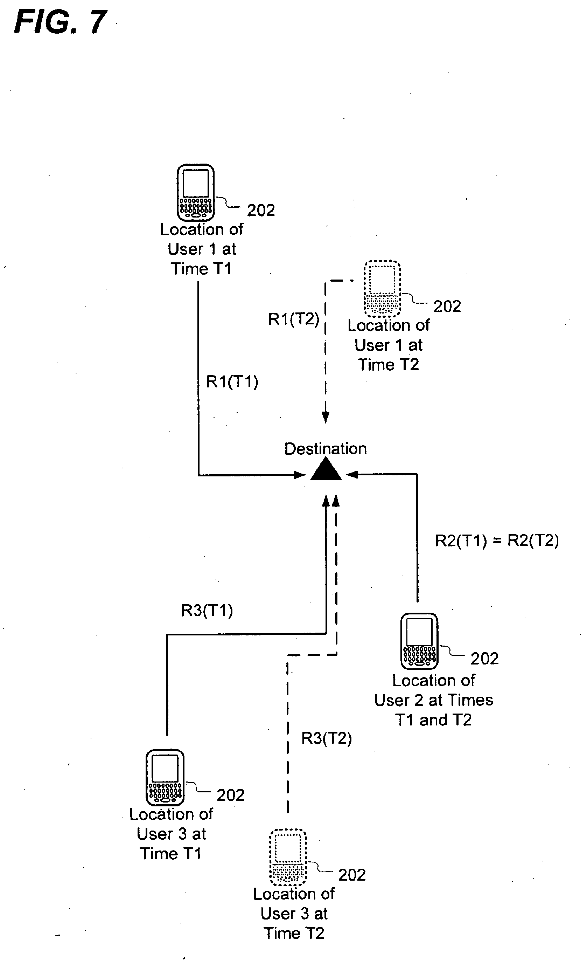

Implementations of the present technology will now be further explained with regard to the example scenarios presented in FIG. 6 and FIG. 7. It should be expressly understood that these scenarios are only examples that are provided solely for the purposes of illustrating how the technology works in certain circumstances. Accordingly, these examples should not be construed as limiting any of the aspects of the technology already described above and claimed in the appended claims.

Consider first the example scenario depicted schematically in FIG. 6, showing a mobile user 1 ("User 1") who is carrying and operating a GPS-enabled wireless communications device 202 configured in accordance with the implementations described above in order to generate (and then subsequently update) route information dynamically upon receipt of a destination location from a sender. As depicted in this example, User 1 is located on Highway 701 at Time T1. Assuming User 1 receives wirelessly at that time (i.e. Time T1) a destination location from a sender corresponding, for example, to the triangular icon marked "Destination" on this particular map, then route information would be generated for the route from the starting location being the current location at Time T1 to the destination location ("Destination"). The route information is then downloaded to the device 202 and displayed or audibly reported to User 1, e.g. as a map graphically showing the route, as a hyperlinked URL to download the map, as a set of textual navigation directions, etc. In this particular example, the route information for User 1 at Time T1 might be a set of textual driving instructions as follows: "Go eastbound on Highway 701, then turn northbound into Highway 702, then turn eastbound onto Highway 705, and follow Highway 705 north until the Destination." As noted earlier, the route information could be presented graphically as a map. In a variant, text-to-voice technology can be used to provide audible turn-by-turn navigation instructions.

Still referring to the example scenario presented in FIG. 6, assume now that User 1 has traveled to a new location by Time T2. The device 202 updates the route to the destination by using the GPS position fix at the new location for Time T2. New route information is then generated. For example, this route information might be a set of textual navigation instructions that reads: "Follow Highway 702 northbound and turn eastbound on Highway 705. Follow Highway 705 north until the destination." Distances could also be inserted where available, e.g. "Follow Highway 705 north for 1 mile (1.6 kilometers) and turn eastbound on Highway 705..." As noted above, an updated map with the updated route graphically highlighted could be used in lieu of, or in addition to, the updated driving instructions. Where a continual GPS fix is available, the mapped route can be updated in real-time on the display of the device. Where text-to-voice is being used, the audible report could state that the route directions have now been updated to reflect the changed position relative to the destination so as to alert the user and avoid confusion.

Still referring to the example scenario presented in FIG. 6, assume now that User 1 has traveled again and by Time T3 is located on Highway 704 heading north (i.e. the wrong way). The device would then update the route instructions to indicate that the user is to go southbound on Highway 704 and turn eastbound on Highway 705 in order to reach the destination. As a further variant, a special alert can be triggered if the actual route being taken by the user digresses too much from the generated route to the destination. For example, if the user turns westbound onto Highway 704 (from Highway 702) instead of going eastbound onto Highway 705, an alert can be triggered to advise the user that he has now digressed substantially from the route to the destination. This alert feature can be disabled to permit the user to travel any route he or she wishes without receiving these alerts.

As a variant on this implementation, route information can be dynamically updated not only to reflect changes in the current position of the recipient's device but also to take into account any updates to the destination originally specified by the sender and which may have been received subsequently to the receipt of the initial destination location. Consider the case where the sender realizes that the destination is no longer appropriate or was erroneously specified in the first place. The sender may then wish to update or amend the destination location by sending a remedial communication that would automatically be recognized as such by the recipient device and automatically used to update the route information. For example, referring to the map shown in FIG. 6, consider the scenario where the sender realizes that the destination is inappropriate or incorrect and then wishes to redirect the recipient to, say, the Airport. This new destination location would be sent with the current location as location data to the route information server to obtain new route information representing the new route from the current position of the device to the Airport. For example, if User 1 received this destination update at Time T3, then the route information might include driving instructions to head south on 704, head south on 702 and turn eastbound on 703 to the Airport and/or a map showing this route (or alternatively a hyperlinked URL to such a map). Textual or audible instructions should preferably indicate that a destination change has occurred so as to alert the user and to avoid confusion.

FIG. 7 schematically depicts an example scenario involving the distribution of route information describing individualized routes to a common destination. This technique enables a sender to send a single communication to all three recipients (Users 1, 2 and 3) so as to enable each recipient device to generate individualized, customized route information based on the common destination and their respective current locations. For example, as depicted in FIG. 7, the current locations of the wireless devices being operated by Users 1, 2 and 3 at Time T1 are shown schematically by the wireless devices drawn in solid lines. In this example, each of Users 1, 2 and 3 is located in a different geographical location, e.g. in different cities, in different countries, in different parts of the same city, in different parts of the same neighbourhood, etc. However, it should be noted that this technology can be used equally well if more than one user is located in the same position (their individualized routes will simply be the same, although each one may then be dynamically updated if they part). On receipt of a common destination from the sender (who is not shown in this figure), each of the three devices independently generates route information, e.g. by querying the route information server (e.g. map server) to ask for a route for each device's own current location to the common destination. Route R1(T1) is thus the route from the current location of User 1 to the destination at Time T1. Route R2(T1) and Route R3(T1) are the respective routes for Users 2 and 3 at Time T1. These routes R1, R2 and R3 are then dynamically updated as the Users 1, 2 and 3 move about in time. Assume that, for example, at Time T2, User 1 has moved and User 3 has also moved (shown by the dotted-line representations of their respective devices). Assume, for example, that at Time T2, User 2 has remained in the same place as he was at Time T1. In that case, new routes are generated for Users 1 and 3 but not for User 2. The newly updated routes R1(T2) and R3(T2) are the updates routes for Users 1 and 3 whereas R2(T2) is equal to R2(T2) since that user (User 2) has not changed locations, resulting in no change in the route to destination. As shown in this example, dynamic updating is performed individually for each device provided each device can maintain its GPS position fix (or know its location through other positioning/triangulation techniques).

The route information can be sent as a hyperlinked URL or as an XML document (e.g. a map location document). For example, the route information could entail a hyperlinked URL address with an attribute specifying that the FROM location (i.e. the starting location) is to be the receiving user's current location as determined using GPS or other positioning equipment. The URL (or XML document) could also contain a default FROM location in case it is not possible to obtain the current location of the receiving user. The browser on the client device detects that the URL is a map location (or set of directions) and invokes the map application with the parameters provided in the communication to the recipient device. An example modification that can be made to enable the map application to use the recipient's current location, if available, instead of a default starting location, is to add another parameter into the code (the "currentLocation" parameter) and then to set this parameter to "true", such as, for example, by setting currentLocation=true. An example of a hyperlinked URL having this currentLocation parameter is: http://maps.blackberry.com?startLat=45.40035&startLon=-75.73608&currentLocation=true&endLat=45.34078&endLon=-75.9192

For an XML document, an example implementation would be as follows:

```
 <1bs>
 <getRoute>
     <location x='-7573608' y='4540035' currentLocation='true' />
      <location x='-7591429' y='4534078' />
  </getRoute>
 </lbs>
```

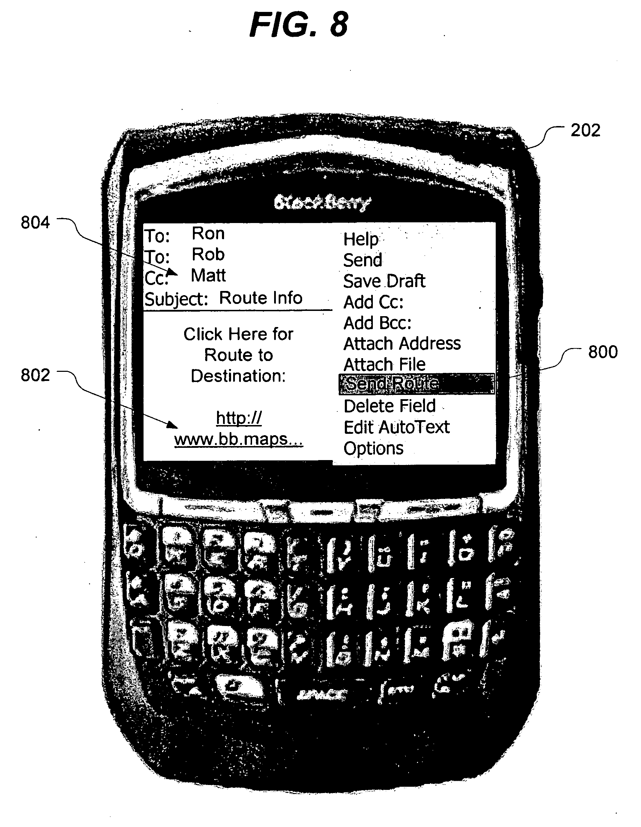

FIG. 8 depicts an example of a sender's wireless communications device 202 that executes an application (e.g. a mapping application or an e-mail application) that is configured to enable the sender to send a route (or send route information) to one or more mobile recipients. Since the sender need not be mobile, the sender can also send the route information from another type of computing device, such as, for example, a desktop computer or laptop computer that is networked to a data communication network (e.g. the Internet) to the mobile recipients. The wireless communications device 202 is the preferred type of computing device because this enables the user to both send and receive destination locations in accordance with the implementations described herein. In any event, the wireless device shown in FIG. 8 has, by way of example, a drop-down menu that enables the sender to choose an option such as "Send Route" 800 to send route information (i.e. a destination with a default starting location) to one or more recipients. In this example, the multiple intended recipients ("Ron", "Rob" and "Matt") of the common destination are entered into the "To:" and "Cc:" fields 804, as shown. Optionally, the message editing window 802 can show the message or communication as it will be received by the recipients. Alternatively, this window can be used to show the default location and the destination that has been selected.

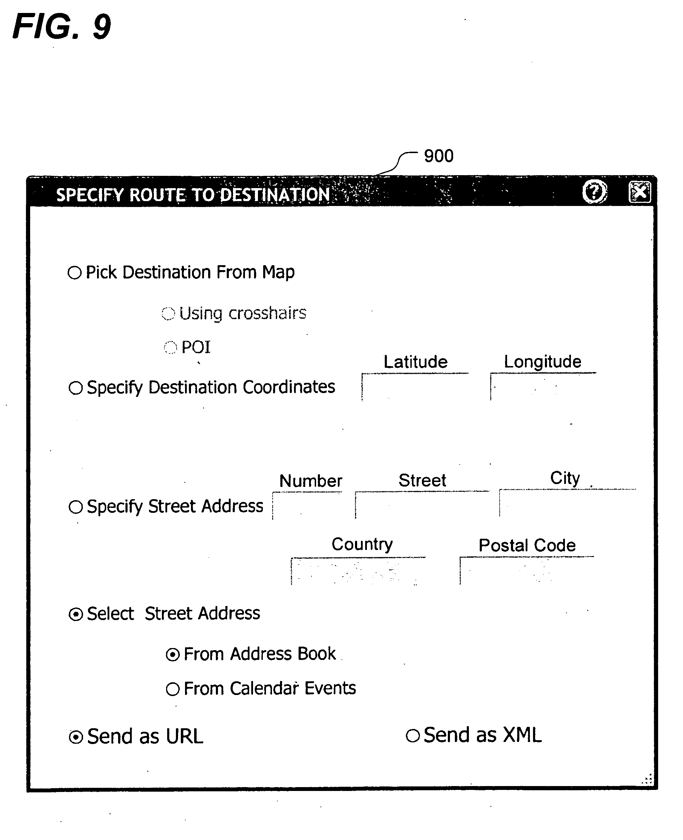

FIG. 9 depicts an example of a user interface 900 that enables the sender to specify or select the destination to be sent as part of the communication to the recipients. After selecting the "Send Route" function from the drop-down menu presented in FIG. 8, the interface 900 presented in FIG. 9 may be displayed to the sender (unless the destination has already been specified in some other manner). The interface 900 presents a variety of options for selecting or specifying the destination location. For example, one way.of selecting the destination location is to pick a mapped location from a map displayed onscreen using the mapping application. Another way of selecting the destination location is merely to send a message (from within a messaging application other than the mapping application such as for example a phone, e-mail, instant messaging or an SMS application) with route information based, for example, on the sender's the current location. Other ways are shown merely by way of illustration in FIG. 9. For example, the interface could present options such as picking the destination from a map using either crosshairs or a point of interest (POI), specifying destination coordinates in terms of latitude and longitude, specifying the street address, or selecting the address from an address book or from location information stored in association with a calendar event in a calendar application. As shown, appropriate fields may be provided to facilitate the sender's task of specifying the destination location. As will be appreciated, the destination location can be selected in other manners as well, such as, for example, by intelligently extracting a destination's address from e-mails, word-processing documents, spreadsheets, Web documents, by, for example, using parsing technology that is able to recognize a street address. As further shown in FIG. 9, the interface 900 could also provide a number of options governing how the communication is to present the destination and default locations to the recipient devices. For example, the interface 900 could enable the sender to specify whether to send the destination and default locations as part of a hyperlinked URL or as an XML document.

Although in the preferred implementation of the present technology GPS receivers are used to determine the current location of each device, it should be appreciated that other techniques can be used to determine the current location, even if these are less accurate. For example, cell tower triangulation or radiolocation techniques, as mentioned above, can be used to generate an approximate current location for the device: Alternatively, the identity (and location) of the cell tower handling the device's communications can be used a rough proxy for the location of the device (although this would, of course, probably not provide sufficient resolution for urban navigation). Another approach would be to prompt the user of the device to enter his or her current location (e.g. entering a street address, picking a POI from a map or selecting the current location using crosshairs on a map). In other words, other types of positioning subsystems can be used to determine the current location, albeit with diminished accuracy compared to GPS receivers.

This new technology has been described in terms of specific implementations and configurations (and variants thereof) which are intended to be exemplary only. The scope of the exclusive right sought by the applicant is therefore intended to be limited solely by the appended claims.

## Claims

1. A method of providing route information for a plurality of wireless communications devices, the method comprising:
dispatching data identifying a destination location from a first communications device to a plurality of second communications devices;
receiving (600) the data identifying a destination location at each respective second communications device;
determining (602) the current location of each of the second communications devices by the individual each of the second communications devices;
determining (608) for each of second communications devices, route information identifying a route from the determined current location of a second communication device to the destination location identified by data received from said first communications device wherein the route is determined by providing the destination location and the determined current location to a route information server; and
providing (614) the determined route information representing the route from the determined current location of a second communications device to the destination location identified by the data received from the first communications device.

2. The method as claimed in claim 1 further comprising steps of:
updating (616) the current location of the second communications devices; and
dynamically updating the route information based on an updated current location of the devices so as to provide dynamic route information.

3. A system for providing route information to a plurality of wireless communications devices (202), the system comprising:
a plurality of communications devices (202) communicatively connected to a communications network (104,118), each of the communications devices (202) comprising a positioning subsystem (550) for determining a device's current location;
a route information server (400,410) communicatively connected to the network (104,118) for transmitting route information to a wireless communications device (202) in response to a request from the wireless communications device identifying a starting location, and a destination location; and
a computing device communicatively connected to said communications network (104, 118) responsive to user input to send data identifying a destination location from a first communication device to said plurality of second communication devices (202),
wherein each said second communication device (202) is responsive to receipt of said data identifying the destination location to generate and transmit the request for route information to said route information server (400,410) identifying the current location determined by the positioning subsystem (550) of each respective device as the starting location and the location identified by said received data as the destination location.

4. The system as claimed in claim 3 wherein each wireless communications device (202) is configured to update its respective current location and to dynamically update the route information based on an updated current location of the device so as to provide dynamic route information to the user.

5. The system as claimed in any one of claims 3 to 4 wherein the positioning subsystem (550) on each wireless communications device (202) comprises a global positioning system 'GPS' receiver chipset.

## Patentansprüche

1. Verfahren zum Vorsehen einer Routeninformation für eine Vielzahl von drahtlosen Kommunikationsvorrichtungen, wobei das Verfahren aufweist:
Versenden von Daten, die eine Zielposition identifizieren, von einer ersten Kommunikationsvorrichtung an eine Vielzahl von zweiten Kommunikationsvorrichtungen;
Empfangen (600) der Daten, die eine Zielposition identifizieren, an jeder jeweiligen zweiten Kommunikationsvorrichtung;
Bestimmen (602) der aktuellen Position jeder der zweiten Kommunikationsvorrichtungen durch die einzelnen der zweiten Kommunikationsvorrichtungen;
Bestimmen (608) für jede der zweiten Kommunikationsvorrichtungen von Routeninformation, die eine Route von der bestimmten aktuellen Position einer zweiten Kommunikationsvorrichtung zu der Zielposition identifiziert, die durch Daten identifiziert wird, die von der ersten Kommunikationsvorrichtung empfangen werden, wobei die Route bestimmt wird durch Liefern der Zielposition und der bestimmten aktuellen Position an einen Routeninformationsserver; und
Vorsehen (614) der bestimmten Routeninformation, welche die Route von der bestimmten aktuellen Position einer zweiten Kommunikationsvorrichtung zu der Zielposition repräsentiert, identifiziert durch die Daten, die von der ersten Kommunikationsvorrichtung empfangen werden.

2. Verfahren gemäß Anspruch 1, das weiter die Schritte aufweist:
Aktualisieren (616) der aktuellen Position der zweiten Kommunikationsvorrichtungen; und
dynamisches Aktualisieren der Routeninformation basierend auf einer aktualisierten Position der Vorrichtungen, um so eine dynamische Routeninformation zu liefern.

3. System zum Vorsehen von Routeninformation an eine Vielzahl von drahtlosen Kommunikationsvorrichtungen (202), wobei das System aufweist:
eine Vielzahl von Kommunikationsvorrichtungen (202), die kommunikativ mit einem Kommunikationsnetzwerk (104, 118) verbunden sind, wobei jede der Kommunikationsvorrichtungen (202) ein Positionierungsteilsystem (550) aufweist zum Bestimmen einer aktuellen Position einer Vorrichtung; einen Routeninformationsserver (400, 410), der kommunikativ mit dem Netzwerk (104, 118) verbunden ist, zum Übertragen von Routeninformation an eine drahtlose Kommunikationsvorrichtung (202) in Reaktion auf eine Anforderung von der drahtlosen Kommunikationsvorrichtung, die eine Startposition und eine Zielposition identifiziert; und
eine Computervorrichtung, die kommunikativ mit dem Kommunikationsnetzwerk (104, 118) verbunden ist, die in Reaktion auf eine Benutzereingabe Daten, die eine Zielposition identifizieren, von einer ersten Kommunikationsvorrichtung an die Vielzahl von zweiten Kommunikationsvorrichtungen (202) sendet,
wobei jede zweite Kommunikationsvorrichtung (202) auf einen Empfang der Daten reagiert, welche die Zielposition identifizieren, um die Anforderung für eine Routeninformation zu erzeugen und an den Routeninformationsserver (400, 410) zu übertragen, die die aktuelle Position identifiziert, die durch das Positionierungsteilsystem (550) jeder jeweiligen Vorrichtung als die Startposition bestimmt wird, und die Position, die durch die empfangenen Daten als die Zielposition bestimmt wird.

4. System gemäß Anspruch 3, wobei jede drahtlose Kommunikationsvorrichtung (202) konfiguriert ist, ihre jeweilige aktuelle Position zu aktualisieren und die Routeninformation dynamisch zu aktualisieren basierend auf einer aktualisierten aktuellen Position der Vorrichtung, um so eine dynamische Routeninformation an den Benutzer zu liefern.

5. System gemäß einem der Ansprüche 3 und 4, wobei das Positionierungsteilsystem (550) auf jeder drahtlosen Kommunikationsvorrichtung (202) einen GPS(Global Positioning System)-Empfänger-Chipsatz aufweist.

## Revendications

1. Procédé de fourniture d'informations d'itinéraire pour une pluralité de dispositifs de communication sans fil, le procédé comprenant les étapes consistant à :
expédier des données identifiant une position de destination entre un premier dispositif de communication et une pluralité de seconds dispositifs de communication ;
recevoir (600) les données identifiant une position de destination sur chacun des seconds dispositifs de communication, respectivement ;
déterminer (602) la position actuelle de chacun des seconds dispositifs de communication, par chaque dispositif individuel parmi les seconds dispositifs de communication ;
déterminer (608) pour chacun des seconds dispositifs de communication des informations d'itinéraire identifiant un itinéraire entre la position actuelle déterminée d'un second dispositif de communication et la position de destination identifiée par les données reçues dudit premier dispositif de communication, l'itinéraire étant déterminé en fournissant la position de destination et la position actuelle déterminée à un serveur d'informations d'itinéraire ; et
fournir (614) les informations d'itinéraire déterminées représentant l'itinéraire entre la position actuelle déterminée d'un second dispositif de communication et la position de destination identifiée par les données reçues du premier dispositif de communication.

2. Procédé selon la revendication 1, comprenant en outre les étapes consistant à :
mettre à jour (616) la position actuelle des seconds dispositifs de communication ; et
mettre à jour dynamiquement les informations d'itinéraire sur la base d'une position actuelle mise à jour des dispositifs, afin de fournir des informations d'itinéraire dynamiques.

3. Système destiné à fournir des informations d'itinéraire à une pluralité de dispositifs de communication sans fil (202), le système comprenant :
une pluralité de dispositifs de communication (202) connectés et communiquant avec un réseau de communication (104, 118), chacun des dispositifs de communication (202) comprenant un sous-système de localisation (550) afin de déterminer la position actuelle du dispositif ;
un serveur d'informations d'itinéraire (400, 410) connecté et communiquant avec le réseau (104, 118) afin de transmettre des informations d'itinéraire à un dispositif de communication sans fil (202) en réponse à une demande émanant du dispositif de communication sans fil qui identifie une position de départ et une position de destination ; et
un dispositif informatique connecté et communiquant avec ledit réseau de communication (104, 118) qui, en réponse à une saisie de l'utilisateur, envoie des données identifiant une position de destination d'un premier dispositif de communication à ladite pluralité de seconds dispositifs de communication (202) ;
dans lequel chacun desdits seconds dispositifs de communication (202) répond à la réception desdites données identifiant la position de destination en produisant et en envoyant la demande d'informations d'itinéraire audit serveur d'informations d'itinéraire (400, 410), celle-ci identifiant la position actuelle déterminée par le sous-système de localisation (550) de chacun des dispositifs respectifs comme position de départ et la position identifiée par lesdites données reçues comme position de destination.

4. Système selon la revendication 3, dans lequel chaque dispositif de communication sans fil (202) est configuré pour mettre à jour sa position actuelle respective et pour mettre à jour dynamiquement les informations d'itinéraire sur la base d'une position actuelle mise à jour du dispositif, afin de fournir des informations d'itinéraire dynamiques à l'utilisateur.

5. Système selon l'une quelconque des revendications 3 et 4, dans lequel le sous-système de localisation (550) de chaque dispositif de communication sans fil (202) est constitué d'un jeu de puces de réception d'un système mondial de localisation (GPS pour « *Global Positioning System* »).
